# EUROPEAN PATENT APPLICATION

(11) **EP 4 711 345 A1**
(43) Date of publication of application: **18.03.2026**
(21) Application number: 25201596.1
(22) Date of filing: 11.09.2025
(51) Int. Cl.: C03B 23/207, A47G 19/22, C03B 23/26

(54) **GLASS CUP WITH BEAUTIFIER ELEMENT INTEGRATED THEREIN AND PROCESS FOR THE ATTAINMENT THEREOF**

(30) Priority: 13.09.2024 IT 202400020467
(71) Applicant: Zafferano S.r.l., 31055 Quinto di Treviso (TV) (IT)
(72) Inventor: DE MAJO, Federico, 31055 Quinto di Treviso (TV) (IT)
(74) Representative: Gallo, Luca

(57) **Abstract**

Process for making a cup with beautifier element integrated therein, which provides for arranging a concave containment body (10) made of glass material intended to receive, fixed therein, a beautifier and a cup body (20), it too made of glass material and intended to receive a drink. The process provides for a first step of joining the beautifier element (100) on the internal surface (11A) of the abutment base (11) of the containment body (10) by means of heating of two opposite connection portions; and a second joining step, which provides for bringing the free perimeter edge (14) of the containment body (10) in abutment against the external face (21B) of the bottom wall (21) of the cup body (20); for rotating the two bodies thus adjacent and heating the junction section (50) shared by both bodies. The junction section (50) is situated on the lying plane of the bottom wall (21) of the cup body (20) so as to be hidden from view by the thickness of the bottom wall (21) itself, i.e. also hidden by the refraction of the bottom wall (21) of the cup body (20).

## Description

### Field of application

The present invention regards a glass cup with beautifier element integrated therein and a process for the attainment thereof, according to the preamble of the respective independent claims.

The present cup and method fall within the industrial field of production of glass objects and in particular of cups for containing drinks.

### State of the art

Known on the market are glass cups with beautifier element integrated therein of the type comprising a cup and a beautifier element fixed to the bottom, advantageously by means of melting of a connection portion. Examples of such embodiment are for example known on the market with the Ichendorf^{®} commercial trademark.

One such cup solution has proven quite inconvenient to use, given the difficulty of cleaning the beautifier element fixed on the bottom inside the cup. Further disadvantage lies in the possibility of breaking or ruining the beautifier element during use of the cup, for example following the use of a spoon.

Also known from the patent CN 111820690 is a cup which comprises an upper portion made of glass and a lower portion made of ceramic, plastic or metal. In particular, the upper portion delimits two housing chambers, of which the first housing chamber is open at the top and is adapted to receive drinks and the second housing chamber is adapted to receive a beautifier element.

More in detail, after having fixed the beautifier element on the upper surface of the lower portion by means of an adhesive and having suitably positioned the upper portion on the lower portion due to the engagement of one edge of the upper portion in recesses formed on the upper surface of the lower portion, the two portions are rigidly connected by means of gluing, so as to create a double empty portion, corresponding to the second housing chamber, in which the aforesaid beautifier element is placed.

Also known are various other solutions of cups which incorporate a beautifier element within a chamber made in the base of the cup itself. Several embodiments are for example described in US 740834, JP S6036776, US 2510237, US 6368531 and US 6036570. The glass cups with, incorporated in the base, a beautifier element of known type briefly described above have proven that they do not lack drawbacks.

A first drawback lies in the fact that the processes for producing cups maintain visible the junction between the two parts of the cup, which define the chamber with the beautifier element inside.

A second drawback lies in the fact that up to present, processes have not yet been designed that allow the production of a cup with, integrated in a chamber, a beautifier element and that allow a secure fixing both of the two parts of the cup that delimit the containment chamber of the beautifier element and of the beautifier element itself on the bottom of the cup.

### Presentation of the invention

In this situation, the problem underlying the present invention is therefore that of overcoming the drawbacks of the abovementioned prior art, by providing a cup and a process for the attainment thereof, which allow incorporating a beautifier element separated from the volume of the cup intended for containing the drink.

A further object of the present invention is to provide a cup and a process for the attainment thereof, which allow hiding from view a junction section that acts to separate a containment chamber containing the beautifier element from the volume of the cup intended to receive a drink.

A further object of the present invention is to provide a process for producing a cup with beautifier element integrated therein which is simple and reliable to attain.

A further object of the present invention is to provide a process for producing a cup with beautifier element integrated therein which allows varying, in a versatile manner, the beautifier element to be integrated.

### Brief description of the drawings

The technical characteristics of the invention, according to the aforesaid objects, are clearly seen in the contents of the below-reported claims and the advantages thereof will be more evident in the following detailed description, made with reference to the enclosed drawings, which represent a merely exemplifying and non-limiting embodiment of the invention, in which:

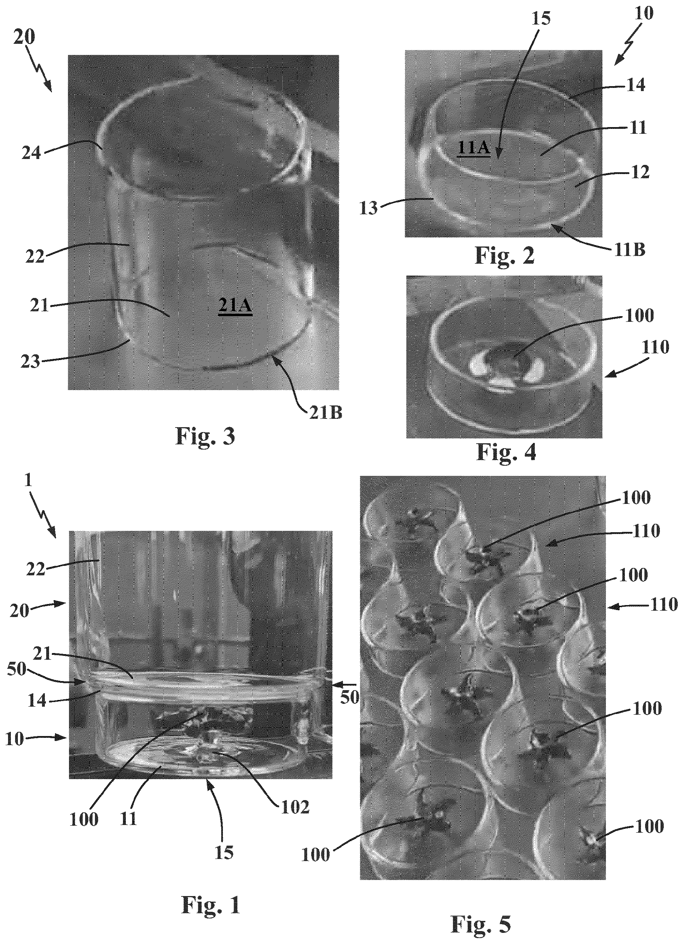

- figure 1 shows a perspective view of a cup with beautifier element integrated therein according to the present invention;
- figure 2 shows a component of the cup of figure 1 relative to a containment body;
- figure 3 shows a component of the cup of figure 1 relative to a cup body;
- figure 4 shows a component of the cup of figure 1 relative to the containment body with a beautifier element fixed therein;
- figure 5 shows a second view of the component of figure 4 with a different beautifier element fixed to the containment body;
- figure 6 shows a heating means for preheating beautifier elements or intermediate semifinished products;
- figure 7 shows a different heating means for preheating components of the cup according to the invention constituted by containment bodies;
- figures 8-10 show three steps for making an intermediate semifinished product of the cup, object of the present invention;
- figure 11 shows a different heating means for preheating components of the cup such as the containment body or for the final relaxation heating of the formed cup;
- figure 12 shows an enlarged detail in side view of the lower part of the cup, object of the present invention;
- figure 13 shows, in side view, the enlarged detail of the cup according to the invention relative to an intermediate semifinished product;

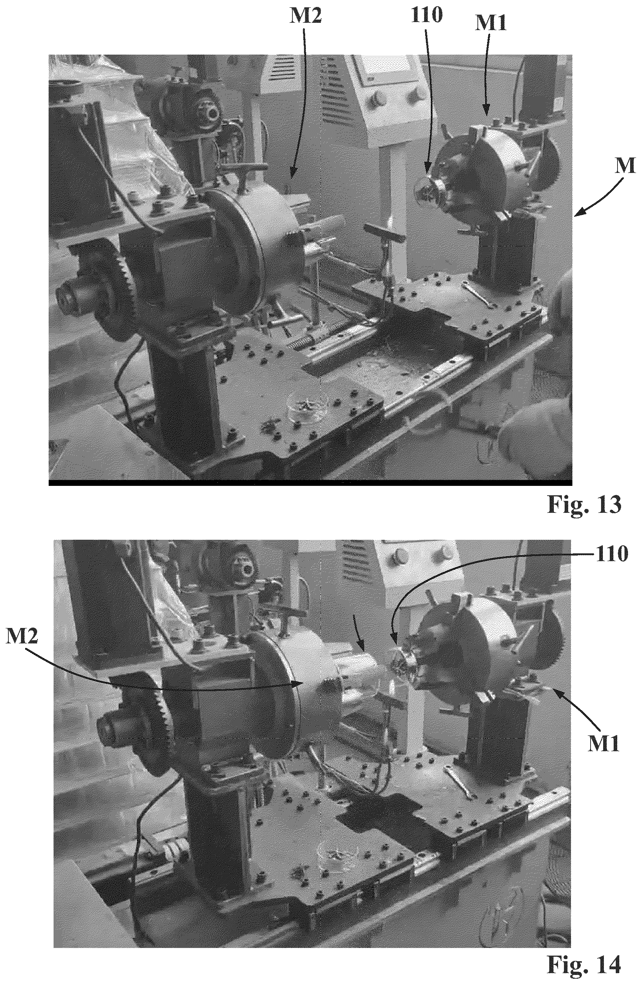

- figures 13-20 show different steps, preferably in sequence, which lead to the junction of two components of the cup according to the invention, i.e. the intermediate semifinished product and the cup body.

### Detailed description of a preferred embodiment

With reference to the enclosed figures, reference number 1 overall indicates an embodiment of a glass cup with beautifier element integrated therein according to the present invention, which is advantageously obtainable by means of a process, it too object of the present invention.

With the term "cup", it must be intended any one object employable for containing alimentary liquids, such as in particular chalices, goblets, cups, small cups or even pitchers, bottles or the like.

All of the aforesaid products have in common the fact that they are made of glass material in accordance with the product and process described and claimed in the present patent. In accordance with the example of the enclosed figures, the glass cup with beautifier element integrated therein according to the present invention comprises a concave containment body 10 made of glass material provided with an abutment base 11 delimited by a perimeter edge 13 and with a perimeter wall 12 extended starting from the perimeter edge 13 of the abutment base 11, up to a free perimeter edge 14 thereof.

The abutment base 11 is provided with an internal surface 11A, which participates to define the concavity of the containment body, and with an external surface 11B.

The cup 1 thus also comprises a cup body 20 made of glass material provided with a bottom wall 21 delimited by a peripheral edge and with a lateral wall 22 which is extended starting from the peripheral edge 23 of the bottom wall 21 up to its access mouth 24. The bottom wall 21 is provided with an internal face 21A placed in the volume delimited by the cup body 20, and with an external face 21B opposite the internal face 21A.

The containment body 10 is preferably cylindrical with the abutment base 11 with substantially circular shape.

The cup body 20 has a cylindrical extension defined starting from a generatrix bottom wall 21 which could have any shape, even if the circular shape is once again preferable.

The cup 1 also comprises a beautifier element 100, which is fixed at a second connection portion 102 thereof to a first connection portion 15 of the internal surface 11A of the abutment base 11 of the containment body 10. Without departing from the protective scope of the present patent, multiple beautifier elements 100 can be provided that are fixed to the abutment base 11 of the containment body 11.

The beautifier element 100 is constituted, by way of example, by a shaped body reproducing the appearances of an animal, a flower, a vehicle, a fruit, a tool, a boat, an airplane, an object of common use or other ornamental figures. Advantageously, each beautifier element 100 has a projecting appendage 101, which is intended to be fixed to the abutment base 11 of the containment body 10, preferably in centered position, as explained hereinbelow.

The fixing of the beautifier element 100 to the abutment base 11 of the containment body 11 is obtained via softening of a welding portion of the glass material which composes the first or the second connection portion of the abutment base 11 and/or of the beautifier element 100.

Advantageously also the beautifier element 100 is made of glass material, even if it can also be made of another material such as for example metal. In the latter case, the fixing will be obtained via softening of the single abutment base 11.

The beautifier element 100 is completely contained within the containment chamber delimited by the containment body 20 and by the bottom wall 21 of the cup body 20.

The free perimeter edge 14 of the containment body 10 is contained within the area delimited by the bottom wall 21 of the cup body 20 defining in particular a step-like progression between the perimeter wall 12 of the containment body 10 and the bottom wall 21 of the cup body 20.

In addition, the free perimeter edge 14 of the containment body 10 is fixed, preferably centrally, on the external face 21B of the bottom wall 21 of the cup body 20 along a junction section 50 which lies on the lying plane of the bottom wall 21 of the cup body 20 so as to be hidden from view by the thickness of the bottom wall 21 or also by the refraction of the bottom wall 21 of the cup body 20.

Preferably, the junction section 50 is placed at an angle α defined between the perimeter wall 12 of the containment body 10 and an annular crown 210 of the bottom wall 21 of the cup body 20. Advantageously, the aforesaid angle α is less than 180°, and in particular is an acute angle, or a right angle or an obtuse angle. Such angle α is advantageously 90 degrees and such annular crown is preferably circular.

Advantageously, the angle α is defined by the aforesaid step-like progression between the perimeter wall 12 of the containment body 10 and the bottom wall 21 of the cup body 20. Advantageously the step-like shape of the bottom of the cup thus attained allows stacking one cup in another (i.e. with the containment body of a cup inserted in the mouth of the cup body of another cup) with consequent ease of transport of multiple stacked cups and reduction of space.

Also forming the object of the present invention is a process for attaining the aforesaid cup 1 with beautifier element 100 incorporated therein, in particular according to the characteristics of the embodiment described above, the reference numbers will be maintained for the sake of description simplicity.

The aforesaid process provides for a step of arranging a concave containment body 10 made of glass material comprising an abutment base 11 and a perimeter wall 12 extended starting from the perimeter edge 13 of the abutment base 11, up to a free perimeter edge 14. The abutment base 11 is provided with an internal surface 11A, which participates to define the concavity of the containment body, and with an external surface 11B, which is intended to act as a support once the cup 1 has been completely formed wherever the user desires to place it in its normal operating position.

The containment body 10 delimits a concavity with the aforesaid abutment base 11 and perimeter wall 12 that encloses a containment chamber for a beautifier element 100 as described hereinbelow.

With the term "glass material", it must be intended all the silica-based glasses with possible additions of other substances, for example "melting" substances such as borates and nitrates that lower the melting point, or crosslink-forming oxides, crosslink-modifier oxides, intermediate oxides, stabilizing substances that improve the chemical and mechanical properties of the produced glass, refining substances that facilitate the elimination of defects, colorant substances that modify the chromatic appearance of the produced glass, decolorant substances that neutralize the color imparted by other substances, opacifying substances for producing opaline glass.

The process according to the invention then provides for a step of arranging a plurality of beautifier elements 100, preferably also made of glass material. Each beautifier element 100 is by way of example constituted by a shaped body reproducing the appearances of an animal, a flower, a vehicle, a fruit, a tool, a boat, an airplane, an object of common use or other ornamental figures. Advantageously, each beautifier element 100 has a projecting appendage 101, which is intended to be fixed to the abutment base 11 of the containment body 10, preferably in centered position, as explained hereinbelow.

The beautifier element 100 is in each case contained after its fixing in the volume of the containment chamber of the containment body 10, not projecting above the free perimeter edge 14 of the perimeter wall 12.

The containment body 10 is obtained with processes that are per se known and for this reason not described in detail since they are within easy reach of the person skilled in the art. Preferably, the process of production of the glass containment body 10 uses the same production technology as the glass cups, which in particular provides for the mixing of raw materials, such as silica sand, sodium carbonate and calcium carbonate in specific proportions. The mixture is then dissolved at high temperature in an oven usually around 1500 degrees Celsius. The heat melts the mixture, bringing it to a uniform liquid state of molten glass. At this point, the molding takes place by pouring the molten glass in molds, for the glass containment body 10, shaped according to the desired design.

It is possible to use one of the various molding methods used in the production of glass cups for the production of the aforesaid containment body. Among such molding methods, the following are included by way of example: blowing and pressure molding.

The glass is gradually cooled within the molds, being solidified and thus taking on the form of the desired containment body 10.

The mold is then removed and the containment body 10 is subjected to a process of controlled cooling, preventing internal tensions and ensuring the strength and the duration of the glass containment body 10.

After the cooling, the glass containment body 10 is subjected to finish processing in order to eliminate possible imperfections or burrs. A finish processing can be provided, aimed to include the polishing of the edges, the removal of the marks.

The beautifier elements 100, mentioned above, are advantageously also made of glass and can be attained with molding methods that are entirely conventional. Advantageously, also the projecting appendage 101 is made of a single body with the remaining body part of the beautifier element 100, it too made of glass material.

The process thus provides for placing a cup body 20 in turn defined by a bottom wall 21 and by a lateral wall 22 which is extended starting from the peripheral edge 23 of the bottom wall 21 up to an access mouth 24 to the containment volume of the cup body 20. The bottom wall 21 is provided with an internal face 21A, which represents the bottom of the cup on which the drinks are poured, and an external face 21B, intended to be coupled in fixing relationship with the free perimeter edge 14 of the containment body 10.

The free perimeter edge 14 of the containment body 10 delimits an area contained in that defined by the bottom wall 21 of the cup body 20, such that such free perimeter edge 14 can be completely in abutment along the entire extension thereof on the external surface 21B of the bottom wall 21 of the containment body 20. Advantageously this occurs by maintaining an annular crown on the bottom wall 21 outside the wall containment body 10. Advantageously, the free perimeter edge 14 of the containment body 10 has circular extension.

Advantageously, the bottom wall 21 of the cup body 20 has circular extension.

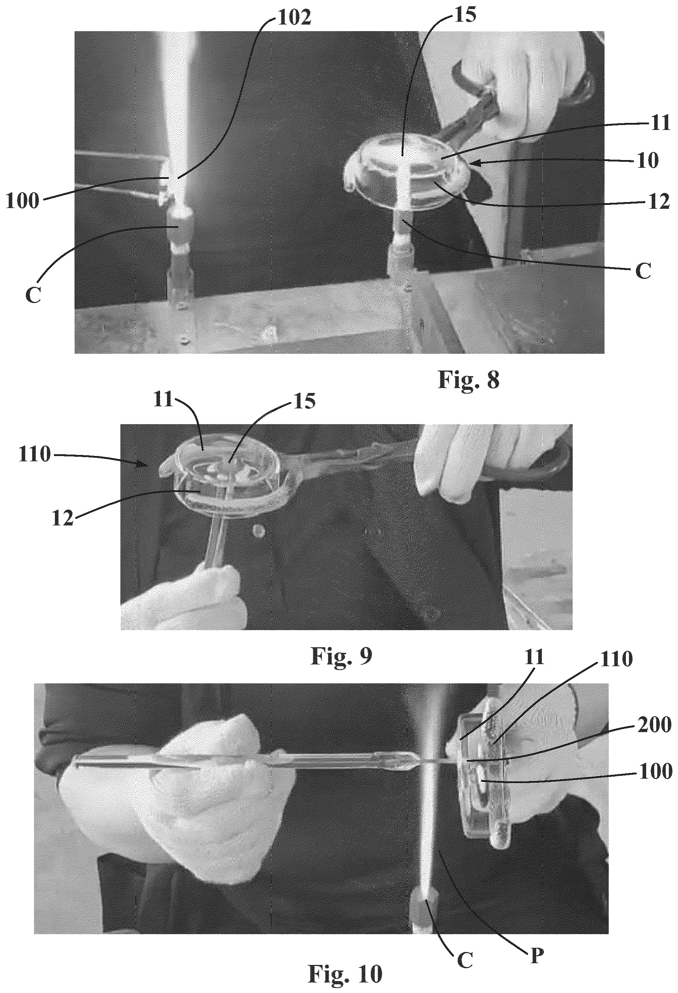

The process for attaining the cup 1 with the beautifier element 100 integrated therein then provides for a first step of joining the beautifier element 100 on the internal surface 11A of the containment body 10. Advantageously, such first joining step provides for a first heating step (see figure 8 on the right) of at least one first connection portion 15 of the internal surface 11A of the abutment base 11 of the containment body 10 at a glass softening temperature, advantageously comprised between 400 and 1100° Celsius and preferably between 700 and 900°C, and a step of compression of a second connection portion 102 of the beautifier element 100 against the first connection portion 15 of the containment body 10 which was softened following said first heating step (see figure 9). Such second connection portion 102 of the beautifier element 100 advantageously corresponds to the free end of the projecting appendage 101 mentioned above.

Such first heating step is preferably obtained with a flame emitted by a torch C (or launch) producing a localized flame, for example which centrally intercepts the aforesaid internal surface 11A of the abutment base 11 of the containment body 10. The heating torch or launch C is a tool with tapered tube form, fed with a fuel gas which terminates with a nozzle that emits a flame at high temperature.

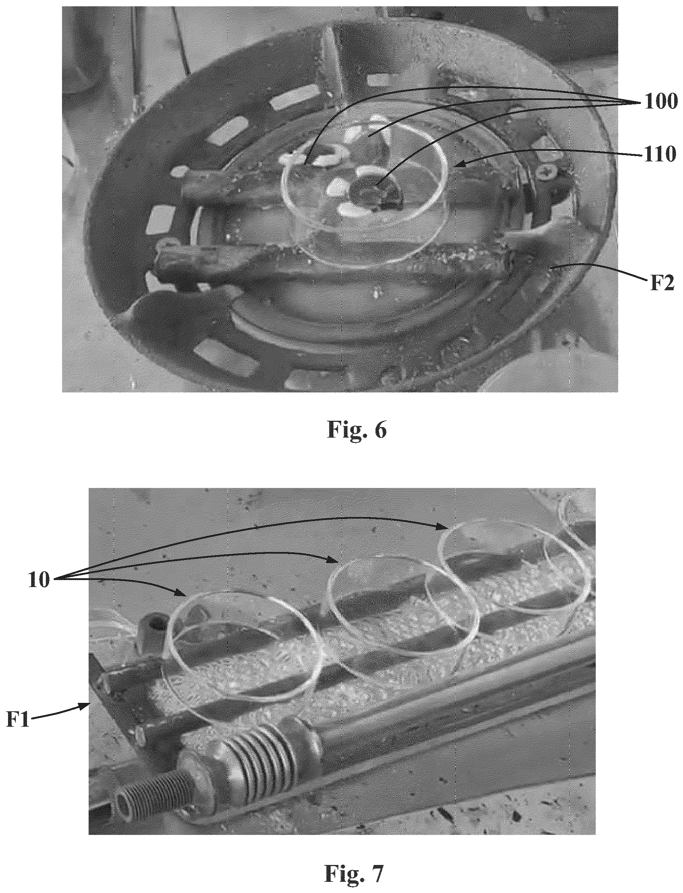

Advantageously, before subjecting the first connection portion 15 of the abutment base 11 of the containment body 10 to the first step of heating in particular with the localized flame, a first step is provided for preheating the entire containment body 10 (see figure 7), placing for example above a distributed heat source, i.e. a heating means F1 (e.g. a burner or incandescent body with irradiation heating), in order to bring the containment body 10 to a temperature preferably comprised between 180 and 300° Celsius and thus prevent the onset of excessive localized tensions during the first heating step which could break the containment body 10 itself.

Preferably, or otherwise as an alternative to the first heating step of the containment body 10, the beautifier element 100 advantageously made of glass material is also or only subjected to the first heating step which affects at least its second connection portion 102 intended to be coupled with the first connection portion 15 of the containment body 10 (see figure 8 on the left). Such first heating step is for example also made with a torch or launch C' (advantageously a separate different launch employed in the first heating step that heats the abutment base 10 of the containment body 10), also producing a localized flame that affects the second connection portion 102 obtained advantageously with the free end of the projecting appendage 101.

Advantageously before compressing the second connection portion 102 of the beautifier element 100 against the first connection portion 15 of the abutment base 11 of the containment body 10, both portions 15 and 102 are heated with the first heating step (see figure 8). The different embodiments, i.e. whether the first connection portion 15 is heated, or the second connection portion 102 is heated, or both are heated, all provide that the first heating step involves the softening of a mass of glass material of at least one connection portion adapted to be bound with the other portion in order to determine a strong mechanical fixing after cooling.

Advantageously, a second step is provided for preheating the entire beautifier element 100, for example by placing it above a heat source, i.e. a heating means F2 (see figure 6) in order to reach a temperature advantageously comprised between 180 and 300° Celsius and prevent the formation of excessive localized tensions during the subsequent processing steps that could break (or creates cracks in) the beautifier element itself 100.

The first step of joining the beautifier element 100, on the internal surface 11A of the abutment base 11 of the containment body 10, therefore has the object of joining together the softened glass material of the respective connection portions 102 and 15 of the beautifier element 100 and of the containment body 10.

Preferably, the beautifier element 100 is, as stated above, provided with a projecting appendage 101 which advantageously defines, at its free end, the aforesaid second connection portion 102, which is heated in such first heating step in order to be fixed to the first connection portion 15 of the containment body 10. In this manner, the beautifier element 100 will be supported on the abutment base 11 of the containment body 10 in a position that is raised with respect to its internal surface 11A due to the aforesaid appendage that acts as a spacer.

At this point, the intermediate semifinished product 110 thus obtained, composed of the containment body 10 with the beautifier element 100 fixed on the internal surface 11A of its abutment base 11, is preferably subjected to a step of perforation of its abutment base 11. Such step is obtained with a heated push rod tool P (see figure 10), for example made of metallic material, which is pressed against the abutment base 11 of the containment body 10 up to attaining a through hole 200.

As will be clarified hereinbelow, the aforesaid through hole 200 has the object of acting as a vent in a subsequent step of the process for the air which is generated in a closed containment chamber delimited by the containment body 10 and by the bottom wall 21 of the cup body 20.

At this point, a second joining step takes place which comprises an approaching step (figures 13-16), in which the containment body 10 and the cup body 20 are approached with respect to each other up to bringing the free perimeter edge 14 of the containment body 10 in abutment against the external face 21B of the bottom wall 21 of the cup body 20 hence at a junction section 50 thereof.

In accordance with the preferred embodiment of the present invention, the intermediate semifinished product 110 thus obtained with the through hole 200 is then subjected to a step of mounting on a first mandrel M1 (see figure 13) of a machine M with two opposite rotating mandrels with the free perimeter edge 14 directed towards the opposite second mandrel M2.

On the second mandrel M2 on the same machine with two opposite rotating mandrels M, the cup body 20 is then mounted (see figure 14) with its mouth directed towards the opposite first mandrel M1 of the machine M.

Advantageously, both the intermediate semifinished product 110 and the cup body 20 are further subjected to a respective third and fourth preheating step before being mounted on the respective opposite mandrels M1, M2 (figure 6 in which nevertheless the cup body 20 is not illustrated), which brings them to a temperature advantageously comprised between 180 and 300° Celsius.

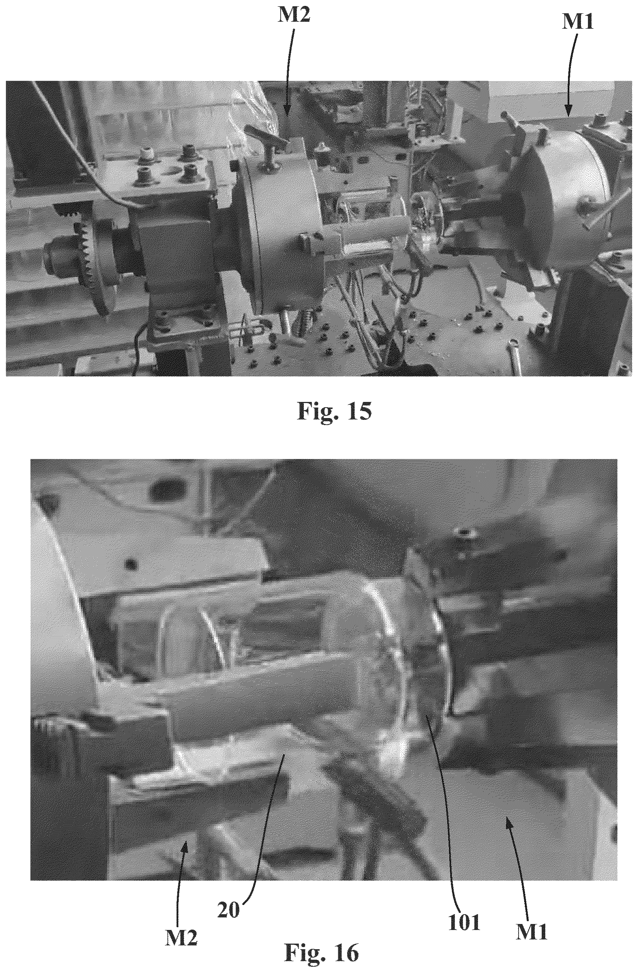

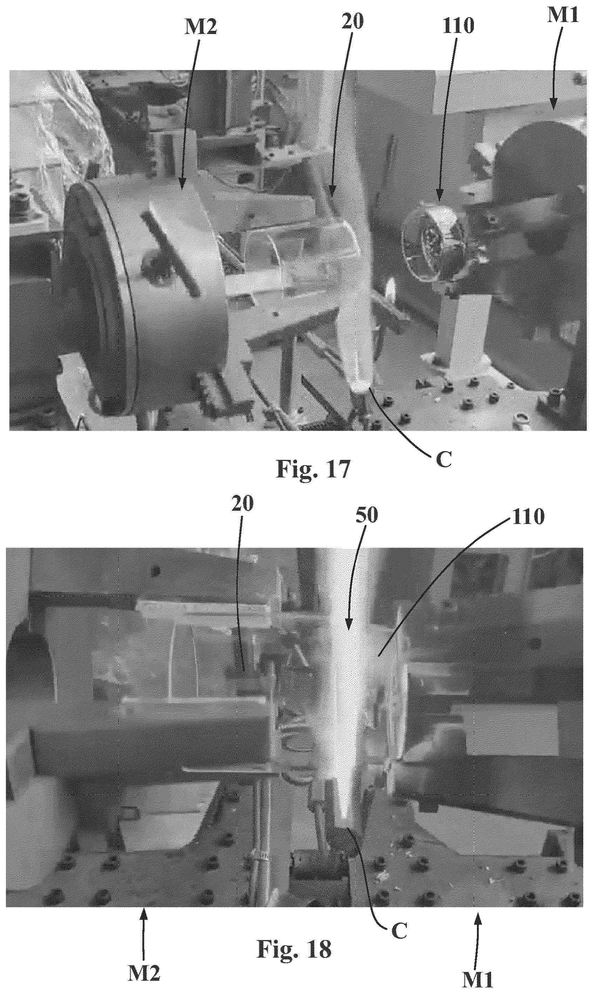

The approaching step is then preferably actuated by means of translation of at least one mandrel towards the other mandrel, so as to bring the intermediate semifinished product 110 and the cup body 20 into contact with each other, as specified above. Advantageously, once the two bodies 110 and 20 are rendered integral with the two opposite mandrels M1, M2, the latter are brought close to each other, in particular by moving the movable mandrel with respect to that fixed up to an end stop relative to an approached position of the mandrels (figure 16). With the mandrels in such position, at least one of the two mandrels is loosened (M2 in the case of the example of the enclosed figures), the body associated with such mandrel is repositioned (i.e. the cup body 20 in the example of figure 16, 17) by placing it in contact with the other body and the loosened mandrel is reclosed in order to define, in the end stop position, the contact coupling of the two bodies. At this point, the step of approaching the two bodies 10, 20 is attained, the operations of the second joining step proceed as specified hereinbelow.

Then, there is a step of rotating the two bodies coupled with the containment body 10 in abutment against the cup body 20 in particular transported in such rotation by the two mandrels M1 and M2 synchronously with each other.

Such rotation step occurs simultaneously with a second step of heating of the junction section 50 by means of an elongated flame attained by an elongated torch C2 which substantially covers the width of the cup (see figure 18). The junction section 50 is extended parallel in front of the elongated flame.

The junction section 50 lies on the lying plane of the bottom wall 21 of the cup body 20 so as to be hidden from view by the refraction of the bottom wall 21 itself.

The free perimeter edge 14 of said containment body 10 is contained in the air delimited by the bottom wall 21 of the cup body 20 such that the approaching step provided herein defines a step-like progression between the perimeter wall 12 of the containment body 10 and the bottom wall 21 of the cup body 20 with an angle α interposed at the junction section 50.

As discussed above, the junction section 50 is placed at such angle α defined between the perimeter wall 12 of the containment body 10 and an annular crown 210 of the bottom wall 21 of the cup body 20.

The junction section 50 is therefore situated in the plane of the bottom wall 21 of the cup body 20 such that it is actually hidden from view, given that it remains defined at the angle α between the free edge 14 of the containment body 10 and the external face 21B of the bottom wall 21 of the cup body 20.

During the second heating step, the junction section 50 defines a plane on which the flame is placed, in particular of elongated form for at least the entire diameter of the junction section.

Advantageously, the flame of the second heating step is fixed, the torch being advantageously mounted fixed on the machine M. In this manner, the junction section 50 of the cup assembly 1 formed by the containment body 10 with the beautifier element 100 fixed thereto and by the cup body 20 fixed to the free perimeter edge 14 of the containment body 10, rotates in front of the flame in order to be subjected to the heating aimed to join together the softened material of the free edge 14 of the containment body 10 with the softened material of the external face 21B of the bottom wall 21 of the cup body 20.

The high temperature of the flame involves the softening of the portions in mutual contact of the containment body 10 and of the cup body, with consequent penetration of glass material which once cooled determines a strong and distributed fixing between the two components. Advantageously, at least one of the two bodies in contact, and preferably both, will reach a temperature comprised between 400 and 1100° Celsius.

Since a penetration of the softened glass materials occurs at the aforesaid junction section 50, the mechanical connection, once the glass material is cooled, will be particularly strong. During the second heating step in rotation, the assembly being composed by the containment body 10 with the beautifier element 100 fixed and the cup body 100, the welding via penetration of softened glass material will be extremely regular. This is due to the rotation of the junction section 50 of the aforesaid bodies 10, 20 in front of the flame; such rotation determines a uniform continuity at 360 degrees of the softened glass material between the two coupled bodies. In addition, the junction section 50 is placed at the angle α between the two bodies 10, 20, resulting completely hidden from view, appearing to the user to be determined by the simple refraction of the glass.

During the aforesaid second step of heating the junction section 50 between the containment body 10 and the cup body 20, there is the heating and expansion of the air contained in the containment chamber defined by the containment body 10 and by the bottom wall 21 of the cup body 20.

The air inside such chamber, being expanded, is evacuated from the through hole 200, previously attained on the abutment base 11 of the containment body 10, and which acts as vent for the air, this preventing a breakage, deformation or cracking of the same containment body 10.

Preferably, before the step of approaching the containment body 10 of said intermediate semifinished product 110 and the cup body 20, there is a fifth step of preheating the bottom wall 21 of the cup body 20 (see figure 17). Such step preferably occurs by rotating the cup body 20, advantageously mounted on the respective mandrel, with its bottom wall 21 placed in vicinity to the heat source, such as for example a flame produced by the heating torch or launch mentioned above. Such step involves the bottom wall reaching a temperature preferably comprised between 200 and 1100° Celsius.

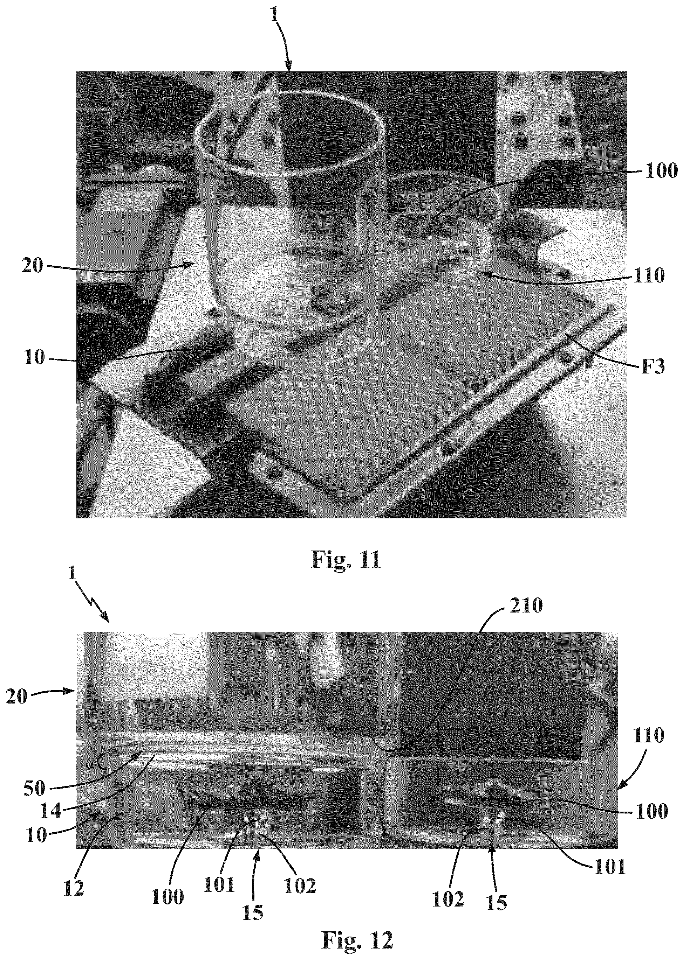

Preferably, also the intermediate semifinished product 110 with the containment body 10, carrying the beautifier element fixed thereto, is subjected to preheating preferably by placing it above a heating means F3 before the step of approaching the cup body 20 (see figure 11) for example at a softening temperature which relaxes the internal tensions comprised between 180 and 400° Celsius.

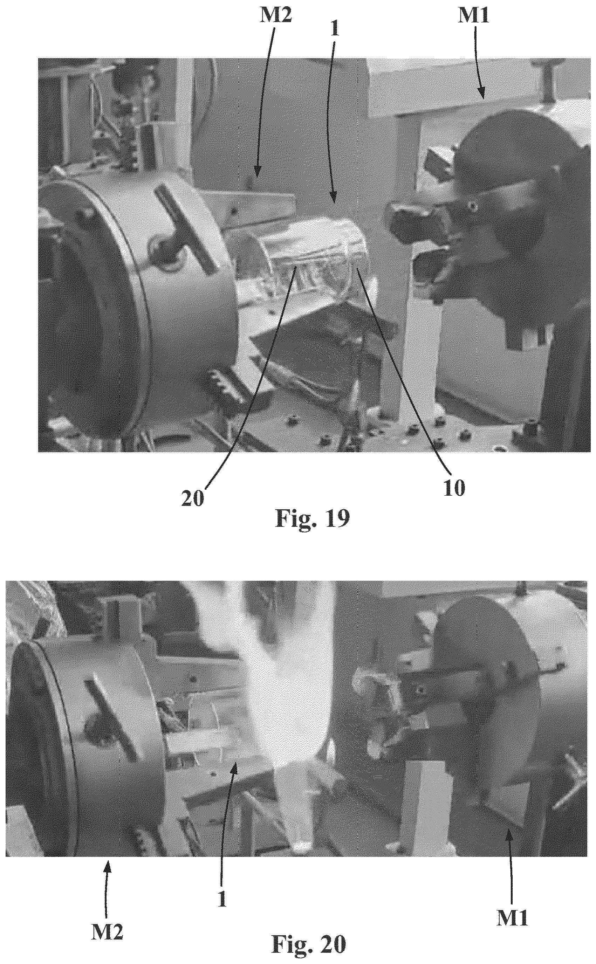

Preferably, at the end of the second step of heating the junction section 50, the containment body 10 after a cooling step (also of brief duration after turning off the flame, see figure 19) is freed from the relative mandrel (M2 in the case of the example), remaining supported by the cup body 20 integral with the other mandrel. At this point and preferably the containment body 10 integral with the cup body 20 (from its abutment base 11 to the junction section 50) is subjected to a further third step of heating with torch flame while the rotation takes place of the cup assembly thus obtained (figure 20). Such step has the object of eliminating internal tensions that have been created in the preceding steps and preferably involves the attainment of the bodies 10 and 20 of a temperature comprised between 180 and 400° Celsius.

Preferably, at the end of this further third step of heating the containment body 10 fixed to the cup body 20, the entire assembled cup assembly is subjected to a step of final relaxation of the internal tensions through a fourth step of heating at lower temperature than that of the third heating step, by placing it above a heat source F3 for a final time comprised between 1 minute and 30 minutes (see figure 11) at a temperature preferably comprised between 180 and 300° Celsius.

Finally, a final step is provided for blocking the through hole 200 by means of insertion, at its interior, of a hardening glue advantageously with the same chromatic character as the abutment base 11 of the containment body 10 and thus for example transparent if the containment body 10 is made of transparent glass.

## Claims

1. Process for making a cup with beautifier element integrated therein, which comprises:
- a step of arranging a concave containment body (10) made of glass material provided with:
- an abutment base (11) delimited by a perimeter edge (13) provided with a first connection portion (15) and
- a perimeter wall (12) extended starting from the perimeter edge (13) of said abutment base (11), up to a free perimeter edge (14) thereof, and defining, with said abutment base, a containment chamber; said abutment base (11) being provided with an internal surface (11A), which participates to define the concavity of the containment body (10), and with an external surface (11B);
- a step of arranging a cup body (20) made of glass material provided with
- a bottom wall (21) delimited by a peripheral edge (23) and
- a lateral wall (22) that is extended starting from the peripheral edge (23) of said bottom wall (21) up to its access mouth (24); said bottom wall (21) being provided with an internal face (21A) placed in the volume delimited by said cup body (20), and with an external face (21B) opposite said internal face (21A);
- a step of arranging at least one beautifier element (100), which has dimensions containable in the containment chamber of said containment body (10) and is provided with a second connection portion (102);
- a first step of joining the beautifier element (100) on the internal surface (11A) of the abutment base (11) of said containment body (10), and such joining step comprises:
- a first step of heating the first connection portion (15) of the abutment base (11) of said containment body (10) and/or the second connection portion (102) of said beautifier element (100) in order to soften the glass material thereof;
- a step of compression, one against the other, of said first and second connection portions (15), (102) obtaining an intermediate semifinished product (110) made of a single body composed of said containment body (10) with said beautifier element (100) fixed on the internal surface (11A) of its abutment base (11),
- a step of perforation of the abutment base (11) of said containment body (10) of said intermediate semifinished product (110) with the formation of a through hole (200);
- a second joining step which comprises
- coupling together the containment body (10) of said intermediate semifinished product (110) and said cup body (20) up to bringing the free perimeter edge (14) of the containment body (10) in abutment against the external face (21B) of the bottom wall (21) of the cup body (20) at a junction section (50) thereof which lies on the lying plane of the bottom wall (21) of said cup body (20) so as to be hidden from view by the refraction of said bottom wall (21); the free perimeter edge (14) of said containment body (10) being contained in the area delimited by the bottom wall (21) of said cup body (20) such that said coupling defines a step-like progression between the perimeter wall (12) of said containment body (10) and the bottom wall (21) of said cup body (20);
- a step of rotating said intermediate semifinished product (110) and said cup body (20) that are coupled together with said containment body (10) in abutment against the cup body (20) and simultaneous
- second step of heating the common junction section (50) by means of a flame in order to join together said intermediate semifinished product (110) and said cup body (20) at said common junction section (50) by attaining a cup assembly in a single body; the air contained in said containment chamber heated in said second heating step, exiting from said through hole (200);
- a step of cooling the cup assembly thus obtained;
- a step of blocking the through hole (200) by means of insertion, at its interior, of a hardening glue advantageously of the same chromatic character as the abutment base (11) of said containment body (10).

2. Process according to claim 1, **characterized in that** each beautifier element (100) has a projecting appendage (101) and that said first step of heating the second connection portion (102) of said beautifier element (100) involves the heating of the free end (102) of said projecting appendage (101) such that at the end of said fixing step, said beautifier element (100) is fixed, raised on said bottom wall (21) by means of said projecting appendage (101).

3. Process according to claim 1 or 2, **characterized in that** before said first joining step, said beautifier element (100) and/or said containment body (10) are subjected to a step of preheating at a temperature comprised between 180 and 300° Celsius.

4. Process according to any one of the preceding claims, **characterized in that** before said step of approaching the containment body (10) of said intermediate semifinished product (110) to said cup body (20), there is a fifth step of preheating the bottom wall (21) of the cup body (20) by means of rotation of its bottom wall (21) on a flame.

5. Process according to any one of the preceding claims, **characterized in that** at the end of said second step of heating said junction section (50), the cup assembly is placed in rotation with the containment body (10) subjected to a third heating step, rotating above a flame.

6. Process according to claim 5, **characterized in that** at the end of said third step of heating the containment body (10) fixed to the cup body (20), the entire cup assembly is subjected to a step of final relaxation of the internal tensions through a fourth step of heating at lower temperature than that of the third heating step, by placing the cup assembly above a heat source for a final time comprised between 1 minute and 30 minutes.

7. Process according to any one of the preceding claims, **characterized in that** the step of rotation of said intermediate semifinished product (110) and of said cup body (20) coupled together with said containment body (10) in abutment against the cup body (20) is obtained by supporting said intermediate semifinished product (110) and said cup body (20) with two opposite mandrels of a machine with two mandrels rotating synchronously.

8. Process according to claim 7, **characterized in that** said second step of heating said junction section (50) is obtained with a flame launch mounted fixed on said machine and intercepting said junction section during said rotation step.

9. Glass cup with beautifier element integrated therein, which comprises:
- a concave containment body (10) made of glass material provided with:
an abutment base (11) delimited by a perimeter edge (13) and
a perimeter wall (12) extended starting from the perimeter edge (13) of said abutment base (11), up to a free perimeter edge (14) thereof;
said abutment base (11) being provided with an internal surface (11A), which participates to define the concavity of the containment body (10), and with an external surface (11B);
- a cup body (20) in glass material provided with
a bottom wall (21) delimited by a peripheral edge (23) and
a lateral wall (22) which is extended starting from the peripheral edge (23) of said bottom wall (21) up to an access mouth (24) thereof;
said bottom wall (21) being provided with an internal face (21A) placed in the volume delimited by said cup body (20), and with an external face (21B) opposite said internal face (21A);
- at least one beautifier element (100) fixed at its second connection portion (102) to a first connection portion (15) of the internal surface (11A) of the abutment base (11) of said containment body (10);
wherein the free perimeter edge (14) of said containment body (10) is contained in the area delimited by the bottom wall (21) of said cup body (20), defining a step-like progression between the perimeter wall (12) of said containment body (10) and the bottom wall (21) of said cup body (20), and is centrally fixed on the external face (21B) of the bottom wall (21) of said cup body (20) along a junction section (50) which lies on the lying plane of the bottom wall of said cup body (20) so as to result concealed from view by the refraction of the bottom wall (21) of said cup.

10. Glass cup according to claim 9, **characterized in that** said at least one beautifier element (100) has a projecting appendage (101), which is intended to be fixed to said abutment base (11) of said containment body (10).
